# EUROPÄISCHE PATENTSCHRIFT

(11) **EP 1 787 808 B1**
(45) Veröffentlichungstag und Bekanntmachung des Hinweises auf die Patenterteilung: **29.07.2009**
(21) Anmeldenummer: 06023317.8
(22) Anmeldetag: 09.11.2006
(51) Int. Cl.: B32B 27/36, C08J 5/18

(54) **Folie mit reduzierter Oberflächenspannung**
Polyester film with reduced surface energy
Film avec une tension de superficielle réduite

(30) Priorität: 18.11.2005 DE 102005055096
(43) Veröffentlichungstag der Anmeldung: 23.05.2007
(73) Patentinhaber: Mitsubishi Polyester Film GmbH, 65203 Wiesbaden (DE)
(72) Erfinder: Kliesch, Holger, Dr., 65462 Ginsheim-Gustavsburg (DE); Kuhmann, Bodo, 65594 Runkel (DE); Kiehne, Thorsten, Dr., Nagahama Shiga, 526-0031 (JP); Fischer, Ingo, 65558 Heistenbach (DE); Hora, Franz, 65830 Kriftel (DE)
(74) Vertreter: Schweitzer, Klaus

(56) Entgegenhaltungen:
- EP-A1- 1 375 134
- EP-A2- 0 182 029
- EP-A2- 0 636 655
- US-A- 5 660 932
- US-A- 5 910 274
- DATABASE WPI Week 198732 Derwent Publications Ltd., London, GB; AN 1987-224202 XP002416464 & JP 62 148265 A (SUMITOMO BAKELITE CO) 2. Juli 1987 (1987-07-02)
- DATABASE WPI Week 200449 Derwent Publications Ltd., London, GB; AN 2004-510718 XP002416465 & JP 2004 174788 A (TORAY IND INC) 24. Juni 2004 (2004-06-24)
- DATABASE WPI Week 200260 Derwent Publications Ltd., London, GB; AN 2002-561493 XP002416466 & JP 2002 155152 A (TORAY IND INC) 28. Mai 2002 (2002-05-28)

## Beschreibung

Die Erfindung betrifft eine ein- oder mehrschichtige, orientierte Polyesterfolie, bei der mindestens eine Oberflächenschicht ein Siloxan/Polyetherimid-Copolymer enthält. Die Folie zeichnet sich durch eine deutlich verringerte Oberflächenspannung und damit einhergehende gute Antihafteigenschaften aus.

Polyesterfolien mit Antihafteigenschaften werden in der industriellen Praxis z. B. als Träger für mit Klebstoff beschichtete Materialen benutzt, wobei diese Materialen vor dem Einsatz von dem Träger abgezogen und dann auf ihre vorgesehene Position aufgeklebt werden. Der Träger wird verworfen.

Solche Folien sind in der Regel mit Silikonen oder ähnlichen Verbindungen beschichtet wie u. a. in EP-B-0 536 766 beschrieben. Nachteile dieser Folien sind u. a. die mangelnde Regenerierbarkeit sowie eine häufig niedrige Haftung der Silikonschicht auf der Polyesterfolie, was zu so genannten Abklatscheffekten führt.

Weitere Probleme sind ungleichmäßige Beschichtung oder "back side transfer", also ein Abklatschen von Teilen der Silikonisierung auf die nicht beschichtete Seite der Folie oder auch ein Übertrag von Silikon auf mit der Folie in Berührung kommende Materialien.

Aufgabe der vorliegenden Erfindung war es, eine Folie mit einer mindestens einseitigen Antihafteigenschaft herzustellen, die die beschriebenen Nachteile nicht aufweist.

Gelöst wird diese Aufgabe durch eine ein- oder mehrschichtige Polyesterfolie, die in mindestens einer Außenschicht neben Polyester bevorzugt 1 bis 75 Gew.-% (insbesondere 20 bis 50 Gew.-%) Copolymere aus Polyetherimid und Siloxan enthält. Bei einer einschichtigen Folie befinden sich diese Copolymere in der einzigen vorhandenen Schicht.

Die erfindungsgemäße Folie weist auf der Oberfläche der Außenschicht, die Copolymere aus Polyetherimid und Siloxan enthält, eine reduzierte Oberflächenspannung von bevorzugt unter 40 mN/m, insbesondere von unter 30 mN/m und besonders bevorzugt von unter 20 mN/m, auf.

Bei den Copolymeren aus Polyetherimid und Siloxan handelt es sich um statistische oder Block-Copolymere, wobei Block-Copolymere bevorzugt sind. Bei den Etherimid-einheiten handelt es sich bevorzugt um aromatische Etherimide wie sie z. B. in den Polyetherimiden enthalten sind, die unter dem Handelsnamen ^{®}Ultem von General Electrics vertrieben werden.

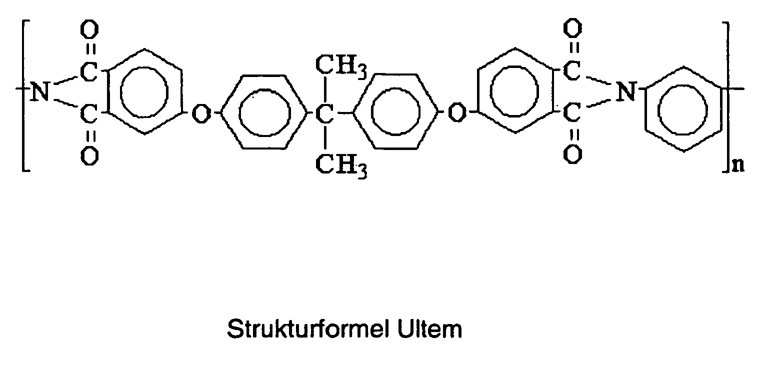

Die Siloxaneinheiten basieren bevorzugt auf Siloxanen der allgemeinen Strukturformel R₁R₂SiO, wobei R₁ und R₂ bevorzugt Alkylgruppen mit 1 bis 8 C-Atomen, insbesondere Methyl- und Ethylgruppen, sind. Insbesondere ist R₁ gleich R₂. R₁ und R₂ können auch Arylgruppen wie z. B. Phenyl (C₆H₅) oder Benzyl (C₇H₈) sein.

Die Copolymeren können aus den Monomeren nach bekannten Verfahren statistisch polymerisiert werden, oder es können zuerst oligomere Polyetherimide und Polysiloxane hergestellt werden, die anschließend zu Block-Copolymeren verbunden werden (s. z. B. EP-A-0 926 204).

Im Sinne der Erfindung bevorzugt sind Polyetherimid/Siloxan-Block-Copolymere wie sie z. B. unter dem Handelsnamen ^{®}Siltem von General Electrics vertrieben werden. Besonders bevorzugt ist ^{®}Siltem STM 1500.

Sowohl für die Etherimide und Siloxane als auch für die (Poly)-Etherimid/Siloxan-(Block)-Copolymere gilt, dass grundsätzlich alle Verbindungen dieser Substanzklassen, deren physikalisch-chemische Eigenschaften denjenigen der hier genannten Verbindungen entsprechen, für die Zwecke der vorliegenden Erfindung brauchbar und einsetzbar sind.

Erfindungsgemäß versteht man unter einem Polyester sowohl
- Homopolyester,
- Copolyester als auch
- Blends verschiedener Polyester,
wobei diese sowohl als reine Rohstoffe als auch als Rezyklat enthaltende Polyester-Rohstoffe eingesetzt werden können.

Polyester enthalten Wiederholungseinheiten, die sich von Dicarbonsäuren (100 Mol-%) und Diolen (ebenfalls 100 Mol-%) ableiten. Die erfindungsgemäßen Polyester basieren bevorzugt auf Terephthalsäure und/oder 2,6-Naphthalindicarbonsäure als Dicarbonsäuren und auf Ethylenglykol als Diol. Weiterhin kann die Hauptdiolkomponente auch 1,4-Butandiol sein.

Insbesondere enthalten die erfindungsgemäßen Polyester 10 bis 100 Mol-% Terephthalat und/oder 10 bis 100 Mol-% 2,6-Naphthalat als Dicarbonsäurekomponenten (wobei die Gesamtmenge an Dicarbonsäurekomponenten 100 Mol-% ausmacht). Als weitere Dicarbonsäurekomponenten kann der erfindungsgemäße Polyester 0 bis 50 Mol-% 2,6-Naphthalat (wenn als Hauptkomponente Terephthalat eingesetzt wurde), 0 bis 50 Mol-% Terephthalat (wenn als Hauptkomponente Naphthalatverwendetwurde), 0 bis 20 Mol-% Isophthalat (bevorzugt 0,5 bis 4 Mol-%) sowie 10 bis 60 Mol-% 4,4'-Diphenyldicarboxylat enthalten. Andere Dicarbonsäurekomponenten wie 1,5-Naphthalindicarboxylat sollten einen Anteil von 30 Mol-%, bevorzugt 10 Mol-%, insbesondere 2 Mol-%, nicht überschreiten.

Als Diolkomponente enthält der erfindungsgemäße Polyester 10 bis 100 Mol-% Ethylenglykol (EG) (wobei die Gesamtmenge an Diolkomponenten 100 Mol-% ausmacht). Der Anteil an Diethylenglykol sollte 10 Mol-% nicht überschreiten und liegt idealerweise zwischen 0,5 und 5 Mol-%. Andere Diolkomponenten wie Cyclohexandimethanol, 1,3-Propandiol, 1,4-Butandiol sollten einen Anteil von 50 Mol-% nicht überschreiten (Ausnahme ist die weniger bevorzugte Variante mit 1,4-Butandiol als Hauptdiolkomponente; d. h. 50 bis 100 Mol-%) und liegen bevorzugt bei einem Anteil von weniger als 30 Mol-%, besonders bevorzugt bei weniger als 10 Mol-%.

Als Polyester besonders bevorzugt ist Polyethylenterephthalat.

Neben den genannten Hauptpolymerbestandteilen Polyester und Polyetherimid/-Polysiloxan-Copolymer oder Poly(Etherimid/Siloxan)-Copolymer kann die Folie in weiteren Ausführungsformen bis zu 40 Gew.-% (bevorzugt bis zu 10 Gew.-%, besonders bevorzugt bis zu 5 Gew.-%, bezogen auf die Masse der Folie) andere Polymere wie Polyetherimide (z. B. ^{®}Ultem 1000 von GE Plastics Europe, NL), Polycarbonat (z. B. ^{®}Makrolon von Bayer, DE) oder Polyamide (^{®}Ultramid von BASF, DE) u. a. enthalten.

Allgemein werden die Polyester nach literaturbekannten Verfahren aus den genannten Diolen und Dicarbonsäuren oder Dicarbonsäureestern hergestellt. Die Herstellung der Polyester kann sowohl nach dem Umesterungsverfahren mit den üblichen Katalysatoren wie z. B. Zn-, Ca-, Li- und Mn-Salzen oder nach dem Direktveresterungsverfahren erfolgen. Um die erfindungsgemäß bevorzugte hohe Transparenz zu erreichen, sollte der Gehalt an Umesterungskatalysator in der Folie, bezogen auf das eingesetzte Metall, 200 ppm nicht übersteigen und liegt bevorzugt bei weniger als 100 ppm, besonders bevorzugt bei weniger als 50 ppm. Bevorzugte Polykondensationskatalysatoren sind Antimon- oder Germaniumverbindungen. Besonders bevorzugt sind jedoch Titanverbindungen. Werden Antimonverbindungen eingesetzt, so liegt der Gehalt an Antimon in der Folie, bezogen auf das eingesetzte Metall, in einer bevorzugten Ausführungsform bei weniger als 210 ppm und besonders bevorzugt bei weniger als 70 ppm. Bevorzugt wird Antimontriacetat (z. B. S21 von Atofina, FR) eingesetzt.

Besonders bevorzugt werden titanbasierte Katalysatoren eingesetzt wie z. B. VERTEC AC420 von Johnson Matthey oder C94 von Acordis. Der Gehalt an Titan liegt dabei bevorzugt unter 60 ppm und besonders bevorzugt unter 20 ppm. Weiterhin hat es sich als günstig erwiesen, wenn alle Komponenten des Katalysatorsystems wie Umesterungskatalysatoren (z. B. Mangansalze) und phosphorhaltige Stabilisatoren (z. B. Polyphosphorsäure, phosphorige Säure, Phosphorsäureesterwie z.B. Ethylphosphat, Diethylphosphat, Phenylphosphat u. a.) und Polykondensationskatalysatoren wie Titanverbindungen zusammen einen Gehalt von 200 ppm, bevorzugt 100 ppm und besonders bevorzugt 75 ppm, nicht überschreiten.

Es hat sich als günstig erwiesen, wenn bei der Polykondensation Stabilisatoren (Radikalfänger) wie ^{®}Irganox 1010 oder 1425 oder 1222 (Ciba, CH) in Konzentrationen zwischen 100 und 5000 ppm zugegeben werden, da dadurch die Bildung von Gelteilchen reduziert wird.

Die Folie gemäß der Erfindung kann weiterhin anorganische oder organische Partikel, die zur Einstellung der Oberflächentopographie dienen, enthalten. Die Menge der eingesetzten Partikel ist abhängig von den verwendeten Substanzen und ihrer Partikelgröße. Letztere liegt im allgemeinen im Bereich von 0,01 bis 30 µm, vorzugsweise 0,1 bis 5 µm und insbesondere 0,3 bis 3 µm.

Geeignete Verbindungen zur Erzielung der gewünschten Rauheit sind z. B. Kalziumcarbonat, Apatit, Siliziumdioxid, Titandioxid, Aluminiumoxid, vernetztes Polystyrol, vernetztes PMMA, Zeolithe und andere Silikate und Aluminiumsilikate. Diese Verbindungen werden im allgemeinen in Mengen von 0,05 bis 30 Gew.-%, vorzugsweise 0,1 bis 1 Gew.-%, eingesetzt. Wenn weiße oder sehr trübe Folien hergestellt werden sollen, werden bis zu 30 Gew.-% Füllstoff (z. B. Bariumsulfat oder Titandioxid) benötigt.

Die angegebenen Werte in Gew.-% beziehen sich auf das Gesamtgewicht der Folie.

Die erfindungsgemäße Folie weist bevorzugt eine Dicke zwischen 1 und 500 µm auf. Insbesondere liegt die Dicke zwischen 6 und 200 µm und besonders bevorzugt zwischen 12 und 75 µm.

Die erfindungsgemäße Folie ist entweder ein- oder bevorzugt mehrschichtig. Die erfindungsgemäßen mehrschichtigen Folien bestehen aus einer Basisschicht B, mindestens einer Deckschicht A oder C und gegebenenfalls weiteren Zwischenschichten, wobei insbesondere ein dreischichtiger A-B-C-Aufbau bevorzugt ist, in der nur eine Schicht A oder C Copolymere aus Polyetherimid und Siloxan enthält. Für mehrschichtige Ausführungsformen ist es vorteilhaft (bessere Schichthaftung), wenn die Schicht, die an die Copolymere aus Polyetherimid und Siloxan enthaltende Schicht angrenzt, ebenfalls 0,1 bis 10 Gew.-% Copolymere aus Polyetherimid und Siloxan enthält. Als besonders vorteilhaft hat es sich erwiesen, wenn das das Copolymere aus Polyetherimid und Siloxan enthaltende Polymer ein Regenerat aus einer Copolymere aus Polyetherimid und Siloxan enthaltenden Folie ist. Überraschend ist es dabei auch, dass der Folie bei Verwendung von z. B. ^{®}Siltem bis zu 25 % derartiges Regenerat zugegeben werden kann (bis 15 % Siltemanteil), ohne dass es zu einer nennenswerten Gelbzahlerhöhung kommt. Für mehrschichtige Aufbauten ist es weiterhin vorteilhaft, wenn alle eingesetzten Polymere eine ähnliche Viskosität bei der gewünschten Extrusionstemperatur aufweisen.

Bevorzugt werden für die Basisschicht B und die Deckschichten A und C die gleichen Polyester verwendet.

Die Dicke der Deckschicht/en wird unabhängig von den anderen Schichten gewählt und liegt bevorzugt im Bereich von 0,1 bis 10 µm, insbesondere 0,2 bis 5 µm, vorzugsweise 1 bis 3 µm, wobei beidseitig aufgebrachte Deckschichten bezüglich Dicke und Zusammensetzung gleich oder verschieden sein können. Die Dicke der Basisschicht ergibt sich entsprechend aus der Differenz von Gesamtdicke der Folie und der Dicke der aufgebrachten Deck- und Zwischenschicht/en und kann daher analog der Gesamtdicke innerhalb weiter Grenzen variieren.

Ebenso kann die Folie zur Einstellung weiterer Eigenschaften beschichtet werden. Typische Beschichtungen sind insbesondere haftvermittelnd, antistatisch, schlupfverbessernd oder dehäsiv wirkende Schichten. Es bietet sich an, diese zusätzlichen Schichten über in-line coating mittels wässriger Dispersionen nach der Längs- und vor der Querstreckung auf die Folie aufzubringen. Diese Schichten werden in der Regel auf die Folienseite aufgebracht, die der Copolymere aus Polyetherimid und Siloxan enthaltenden Schicht abgewandt ist. In einer bevorzugten Ausführungsform kann jedoch eine weitere release (Antihaft-) Schicht auf die Folienseite aufgebracht werden, die Copolymere aus Polyetherimid und Siloxan enthält, da diese z. B. für Silikonbeschichtungen haftvermittelnd wirkt und durch die Kombination aus siloxanhaltiger Schicht und Silikonisierung noch niedrigere Release-Kräfte erreicht werden.

### Verfahren zur Herstellung der Folie

Wenn an den Folienherstellungsmaschinen Zwei- oder Mehrschneckenextruder eingesetzt werden, dann können prinzipiell alle Einsatzstoffe direkt in den Extruder dosiert werden.

Bei Einschneckenextrudern sollten die Polymere für die Schichten, die Copolymere aus Polyetherimid und Siloxan enthalten, vorher in einem Zwei- oder Mehrschneckenextruder vorgemischt werden (Zugabe als Masterbatch). Auch bei Verwendung von Zwei- oder Mehrschneckenextrudern in der Extrusion kommt es so zu einer besseren Verteilung des Copolymeren aus Polyetherimid und Siloxan in der Schicht, so dass ein Vormischen in der Regel zu besseren Eigenschaften führt.

Die Rohstoffe werden bevorzugt vorgetrocknet, wobei bei Verwendung von Zwei- oder Mehrschneckenextrudern in der Extrusion auf die Trocknung verzichtet werden kann. Die Vortrocknung beinhaltet ein graduelles Erhitzen der Masterbatche unter reduziertem Druck (20 bis 80 mbar, vorzugsweise 30 bis 60 mbar, insbesondere 40 bis 50 mbar) sowie Rühren und gegebenenfalls ein Nachtrocknen bei konstanter, erhöhter Temperatur (ebenfalls unter reduziertem Druck). Die bevorzugt eingesetzten Masterbatche werden vorzugsweise bei Raumtemperatur aus einem Dosierbehälter in der gewünschten Abmischung zusammen mit dem Polyesterrohstoff und gegebenenfalls anderen Rohstoffkomponenten chargenweise in einen Vakuumtrockner gefüllt, der im Laufe der Trocken- bzw. Verweilzeit ein Temperaturspektrum von 10 bis 160 °C, vorzugsweise 20 bis 150 °C, insbesondere 30 bis 130°C, durchläuft. Während der etwa 6-stündigen, vorzugsweise 5-stündigen, insbesondere 4-stündigen, Verweilzeit wird die Rohstoffmischung mit 10 bis 70 Upm, vorzugsweise 15 bis 65 Upm, insbesondere 20 bis 60 Upm, gerührt. Das so vorkristallisierte bzw. vorgetrocknete Rohstoffgemisch wird in einem nachgeschalteten, ebenfalls evakuierten Behälter bei 90 bis 180°C, vorzugsweise 100 bis 170 °C, insbesondere 110 bis 160 °C, für 2 bis 8 Stunden, vorzugsweise 3 bis 7 Stunden, insbesondere 4 bis 6 Stunden, nachgetrocknet.

Die Masterbatche sowie die übrigen Rohstoffe können aber auch bei Verwendung von Zwei- und Mehrschneckenextrudern ohne Vortrocknung direkt extrudiert werden.

Bei dem bevorzugten Extrusions- oder Coextrusionsverfahren zur Herstellung der Folie wird so vorgegangen, dass die den einzelnen Schichten der Folie entsprechenden Schmelzen durch eine Flachdüse extrudiert bzw. coextrudiert und als weitgehend amorphe Vorfolie auf einer Kühlwalze abgeschreckt werden (bei der erfindungsgemäßen einschichtigen Folie wird nur eine Schmelze durch die Düse extrudiert). Es hat sich als günstig erwiesen, wenn die Polyesterschmelzen vor dem Eintritt in die Düse über Schmelzefilter mit einer Porengröße filtriert werden, für die der Hersteller eine Rückhaltung von mindestens 50 % für 7 µm große Partikel und bevorzugt von mindestens 50 % für 5 µm Partikel angibt. Geeignet sind sowohl handelsübliche gesinterte Filtermaterialien als auch Vliesfilter.

Die Folie wird anschließend erneut erhitzt und in Längs- und Querrichtung bzw. in Quer- und Längsrichtung bzw. in Längs-, in Quer- und nochmals in Längsrichtung und/oder Querrichtung verstreckt ("orientiert"). Die Folientemperaturen im Streckprozess liegen im allgemeinen 10 bis 60 °C über der Glasübergangstemperatur T_{g} des verwendeten Polyesters, das Streckverhältnis der Längsstreckung liegt üblicherweise bei 2 bis 6, insbesondere bei 3 bis 4,5, das der Querstreckung bei 2 bis 5, insbesondere bei 3 bis 4,5, und das der gegebenenfalls durchgeführten zweiten Längs- und Querstreckung bei 1,1 bis 5. Die erste Längsstreckung kann auch gleichzeitig mit der Querstreckung (Simultanstreckung) durchgeführt werden. Es folgt die Thermofixierung der Folie bei Ofentemperaturen von bevorzugt 180 bis 260 °C, insbesondere von 220 bis 250 °C. Anschließend wird die Folie abgekühlt und gewickelt.

In einer bevorzugten Ausführungsform findet die Thermofixierung zwischen 220 und 250 °C statt, und die Folie wird bei dieser Temperatur um mindestens 1 % (bevorzugt mindestens 2 % und besonders bevorzugt mindestens 4 %) in Querrichtung relaxiert.

In einer weiteren bevorzugten Ausführungsform findet die Thermofixierung zwischen 220 und 250 °C statt, und die Folie wird bei dieser Temperatur um mindestens 1 % (bevorzugt mindestens 2 %) in Querrichtung relaxiert und anschließend nochmals bei Temperaturen zwischen 180 und 150 °C in der Abkühlphase um wiederum mindestens 1 % (bevorzugt mindestens 2 %) in Querrichtung relaxiert.

In einer weiteren bevorzugten Ausführungsform wird die Folie mindestens um den Faktor 3,0 in MD- und TD-Richtung gestreckt, wobei die Streckung in einem Simultanrahmen stattfindet. Die Thermofixierung findet zwischen 220 und 250 °C statt, und die Folie wird bei dieser Temperatur um mindestens 2 % in Querrichtung und bevorzugt auch um 0,5 bis 5 % in Längsrichtung relaxiert (MD = Maschinenrichtung, TD = senkrecht zur Maschinenrichtung).

Die erfindungsgemäßen ein- oder mehrschichtigen Folien weisen die geforderten niedrigen Oberflächenspannungen und Antihafteigenschaften auf.

Weiterhin konnte an den Folien kein Abklatschen der siloxanhaltigen Schicht (z. B. auf die Folienrückseite beim Wickeln) beobachtet werden.

Die Folie eignet sich hervorragend als Release-Film für Aufkleber oder aber auch als Release-Film in der Herstellung von Keramik-Kondensatoren oder als Release-Film für darauf gegossene Polyesterformmassen etc.

Die Messung der einzelnen Eigenschaften erfolgt dabei gemäß den folgenden Normen bzw. Verfahren.

### Messmethoden

### Messung der Oberflächenspannung

Die Oberflächenspannung (Surface free energy) wird aus den Kontaktwinkeln mittels Owens-Wendt-Rabel-Kaelble-Methode berechnet. Als Trägerflüssigkeiten dienen Wasser, 1,5-Pentandiol und Dijodmethan. Die Bestimmung der Kontaktwinkel erfolgt mittels eines DSA-100-Messgerätes der Fa. Krüss GmbH (Hamburg, DE). Die Auswertung nach Owens-Wendt-Rabel-Kaelble erfolgt mittels der zum Gerät gehörenden DSA-Software.

### Folienherstellung

Polyester-Chips R1-R4 für die einzelnen Folienschichten werden gemäß den in den Beispielen angegebenen Verhältnissen gemischt und ohne Vortrocknung jeweils in einem Extruder (bei Monofolie in einem Einschneckenextruder und bei coextrudierter Folie jeweils in Zweischneckenextrudern) aufgeschmolzen. Die geschmolzenen Polymerstränge werden durch eine Düse extrudiert (bei Coextrusion erfolgt die Zusammenführung der Polymerstränge in einer Coextrusionsdüse) und über eine Abzugswalze (Temperatur der Walze 20 °C) abgezogen. Der Film wird um den Faktor 3,5 in Maschinenrichtung bei 116°C (Folientemperatur im Streckspalt) gestreckt und in einem Rahmen bei 110 °C eine Querstreckung um den Faktor 3,6 durchgeführt. Anschließend wird die Folie bei 236 °C thermofixiert und in Querrichtung um 3 % bei Temperaturen von 236 bis 200 °C und ein weiteres mal um 1 % bei Temperaturen zwischen 180°C und 150°C relaxiert. Die Produktionsgeschwindigkeit (Endfoliengeschwindigkeit) beträgt 250 m/min.

### Beispiele

In den Beispielen kommen die folgenden Rohstoffe zum Einsatz:

### Rohstoff R1

100 Gew.-% Polyethylenterephthalat RT49 der Fa. Kosa, DE

### Rohstoff R2

100 Gew.-% ^{®}Siltem STM1500 der Fa. General Electrics, US

### Rohstoff R3

98 Gew.-% Polyethylenterephthalat und 2 Gew.-% ^{®}Sylysia 320 (synthet. SiO₂, Fuji, JP)

### Rohstoff R4

Folienregenerat mit 10 Gew.-% ^{®}Siltem STM 1500 und 90 Gew.-% Polyethylenterephthalat

Es wurden wie eingangs beschrieben Monofolien (Beispiel 1) und Dreischichtfolien hergestellt.

Die Rohstoffe R1 und R2 wurden in Beispiel 1 in einem Zweischneckenextruder vorgemischt und die Mischung granuliert.

Bei den übrigen Beispielen wurden die Rohstoffe direkt vor der Folienextrusion gemischt.

Die Rohstoffzusammensetzung und Eigenschaften der Folie können Tabelle 1 entnommen werden.

Bei der Folienzusammensetzung bzw. Zusammensetzung der einzelnen Schichten handelt es sich um Angaben in Gew.-%.

**Tabelle 1**

| Beispiel 1 | | R1 | R2 | R3 | | Dicke ges. in µm | Oberflächenspannung in mN/m |
|---|---|---|---|---|---|---|---|
| | | 65 | 30 | 5 | | 20 | 25 |
| | | | | | | | |

| Beispiel | Schicht | R1 | R2 | R3 | R4 | Dicke der Schicht in µm | Oberflächenspannung Seite A oder C in mN/m |
|---|---|---|---|---|---|---|---|
| 2 | A | 99 | | 1 | | 4 | 46 |
| | B | 70 | | | 30 | 40 | |
| | C | 50 | 50 | | | 4 | 19 |
| 3 | A | 59 | 40 | 1 | | 2 | 27 |
| | B | 100 | | | | 8 | |
| | C | 99 | | 1 | | 2 | 45 |

## Patentansprüche

1. Orientierte, ein- oder mehrschichtige Polyesterfolie, welche mindestens eine Oberflächen- oder Außenschicht aufweist, die ein Copolymer aus Etherimid- und Siloxan-Einheiten enthält.

2. Polyesterfolie nach Anspruch 1, **dadurch gekennzeichnet, dass** das Copolymer aromatische Etherimid-Einheiten aufweist.

3. Polyesterfolie nach Anspruch 1 oder 2, **dadurch gekennzeichnet, dass** die aromatischen Etherimid-Einheiten die folgende Strukturformel aufweisen:

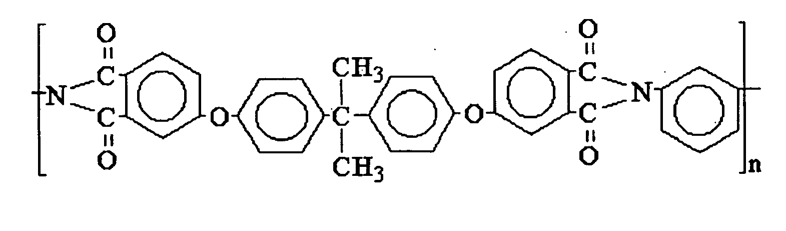

4. Polyesterfolie nach einem oder mehreren der Ansprüche 1 bis 3, **dadurch gekennzeichnet, dass** das Copolymer ein Block-Copolymer mit Polyetherimid- und Polysiloxan-Einheiten ist.

5. Polyesterfolie nach einem oder mehreren der Ansprüche 1 bis 4, **dadurch gekennzeichnet, dass** die Oberflächen- oder Außenschicht das Copolymer zu 1 bis 75 Gew.-% enthält.

6. Polyesterfolie nach einem oder mehreren der Ansprüche 1 bis 5, **dadurch gekennzeichnet, dass** der Polyester Terephthalat- oder 2,6-Naphthalat-Einheiten aufweist.

7. Polyesterfolie nach einem oder mehreren der Ansprüche 1 bis 6, **dadurch gekennzeichnet, dass** der Polyester Polyethylenterephthalat ist.

8. Polyesterfolie nach einem oder mehreren der Ansprüche 1 bis 7, **dadurch gekennzeichnet, dass** die Folie einen A-B-C-Schichtaufbau aufweist, wobei die Deckschichten A und C gleich oder verschieden sind.

9. Polyesterfolie nach einem oder mehreren der Ansprüche 1 bis 8, **dadurch gekennzeichnet, dass** die Basisschicht B und die Deckschichten A und C den gleichen Polyester enthalten.

10. Polyesterfolie nach einem oder mehreren der Ansprüche 1 bis 9, **dadurch gekennzeichnet, dass** die Schicht, welche an die das Copolymer enthaltende Oberflächen- oder Außenschicht angrenzt, ebenfalls ein Copolymer mit Etherimid- und Siloxan-Einheiten enthält.

11. Polyesterfolie nach einem oder mehreren der Ansprüche 1 bis 10, **dadurch gekennzeichnet, dass** die das Copolymer enthaltende Oberflächen- oder Außenschicht eine Oberflächenspannung von kleiner als 40 mN/m aufweist.

12. Verfahren zur Herstellung einer Polyesterfolie nach einem oder mehreren der Ansprüche 1 bis 11 umfassend die Schritte
a) Herstellen einer Folie durch Extrusion oder Coextrusion,
b) biaxiales Strecken der Folie und
c) Thermofixieren der gestreckten Folie.

13. Verfahren nach Anspruch 12, **dadurch gekennzeichnet, dass** die Folie beim Thermofixieren relaxiert wird.

14. Verwendung einer Polyesterfolie nach einem oder mehreren der Ansprüche 1 bis 11 als Trägerfolie.

## Claims

1. An oriented, single- or multilayer polyester film which has at least one superficial or external layer which comprises a copolymer composed of etherimide units and of siloxane units.

2. The polyester film as claimed in claim 1, wherein the copolymer has aromatic etherimide units.

3. The polyester film as claimed in claim 1 or 2, wherein the aromatic etherimide units have the following structural formula

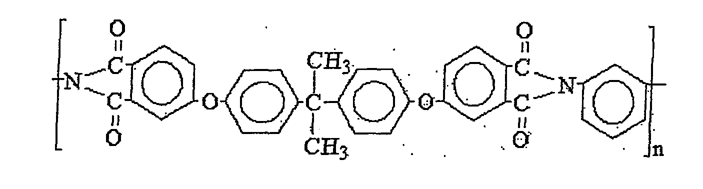

4. The polyester film as claimed in one or more of claims 1 to 3, wherein the copolymer is a block copolymer having polyetherimide units and polysiloxane units.

5. The polyester film as claimed in one or more of claims 1 to 4, wherein the superficial or external layer comprises from 1 to 75% by weight of the copolymer.

6. The polyester film as claimed in one or more of claims 1 to 5, wherein the polyester has terephthalate units or 2,6-naphthalate units.

7. The polyester film as claimed in one or more of claims 1 to 6, wherein the polyester is polyethylene terephthalate.

8. The polyester film as claimed in one or more of claims 1 to 7, wherein the film has an A-B-C layer structure, where the outer layers A and C are identical or different.

9. The polyester film as claimed in one or more of claims 1 to 8, wherein the base layer B and the outer layers A and C comprise the same polyester.

10. The polyester film as claimed in one or more of claims 1 to 9, wherein the layer adjoining the superficial or external layer comprising the copolymer likewise comprises a copolymer having etherimide units and having siloxane units.

11. The polyester film as claimed in one or more of claims 1 to 10, wherein the surface tension of the superficial or external layer comprising the copolymer is smaller than 40 mN/m.

12. The process for production of a polyester film as claimed in one or more of claims 1 to 11, comprising the steps of
a) producing a film via extrusion or coextrusion,
b) biaxial stretching of the film, and
c) heat-setting of the stretched film.

13. The process as claimed in claim 12, wherein the film is relaxed during the heat-setting process.

14. The use of a polyester film as claimed in one or more of claims 1 to 11 as backing film.

## Revendications

1. Feuille de polyester orientée à une ou plusieurs couches, qui présente au moins une couche de surface ou couche externe, qui contient un copolymère constitué d'unités étherimide et siloxane.

2. Feuille de polyester selon la revendication 1, **caractérisée en ce que** le copolymère présente des unités étherimide aromatiques.

3. Feuille de polyester selon la revendication 1 ou 2, **caractérisée en ce que** les unités étherimide aromatiques présentent la formule développée suivante :

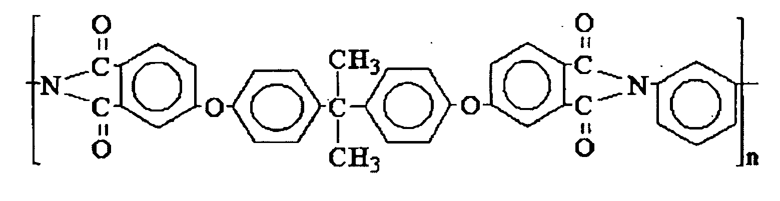

4. Feuille de polyester selon une ou plusieurs des revendications 1 à 3, **caractérisée en ce que** le copolymère est un copolymère de séquence avec des unités polyétherimide et polysiloxane.

5. Feuille de polyester selon une ou plusieurs des revendications 1 à 4, **caractérisée en ce que** la couche de surface ou couche externe contient le copolymère à hauteur de 1 à 75 % en poids.

6. Feuille de polyester selon une ou plusieurs des revendications 1 à 5, **caractérisée en ce que** le polyester présente des unités téréphtalate ou 2,6-naphtalate.

7. Feuille de polyester selon une ou plusieurs des revendications 1 à 6, **caractérisée en ce que** le polyester est le poly(téréphtalate d'éthylène).

8. Feuille de polyester selon une ou plusieurs des revendications 1 à 7, **caractérisée en ce que** la feuille présente une structure stratifiée de type A-B-C, les couches de couverture A et C étant identiques ou différentes.

9. Feuille de polyester selon une ou plusieurs des revendications 1 à 8, **caractérisée en ce que** la couche de base B et les couches de couverture A et C contiennent le même polyester.

10. Feuille de polyester selon une ou plusieurs des revendications 1 à 9, **caractérisée en ce que** la couche limitrophe de la couche de surface ou couche externe contenant le copolymère contient également un copolymère comprenant des unités étherimide et siloxane.

11. Feuille de polyester selon une ou plusieurs des revendications 1 à 10, **caractérisée en ce que** la couche de surface ou couche externe contenant le copolymère présente une tension de surface inférieure à 40 mN/m.

12. Procédé de fabrication d'une feuille de polyester selon une ou plusieurs des revendications 1 à 11, comprenant les étapes consistant à :
a) fabriquer une feuille par extrusion ou par co-extrusion,
b) effectuer un étirage biaxial de la feuille et
c) procéder à une thermofixation de la feuille étirée.

13. Procédé selon la revendication 12, **caractérisé en ce que** la feuille est relaxée lors de la thermofixation.

14. Utilisation d'une feuille de polyester selon une ou plusieurs des revendications 1 à 11 comme feuille de support.
